# EUROPEAN PATENT SPECIFICATION

(11) **EP 0 629 895 B1**
(45) Date of publication and mention of the grant of the patent: **29.12.1997**
(21) Application number: 94303692.1
(22) Date of filing: 24.05.1994
(51) Int. Cl.: G02F 1/1345, G02F 1/136

(54) **Liquid crystal display device**
Flüssigkristall-Anzeigevorrichtung
Dispositif d'affichage à cristal liquide

(30) Priority: 21.06.1993 JP 148762/93
(43) Date of publication of application: 21.12.1994
(73) Proprietor: International Business Machines Corporation, Armonk, N.Y. 10504 (US)
(72) Inventor: Fujii, Yoshiharu, Sagamihara-shi, Kanagawa-ken 228 (JP); Yoshida, Toshihiko, Yokohama-city, Kanagawa (JP); Kitahara, Hiroaki, Hachiouji-shi, Tokyo-to (JP)
(74) Representative: Williams, Julian David

(56) References cited:
- EP-A- 0 376 165
- EP-A- 0 423 824
- PATENT ABSTRACTS OF JAPAN vol. 11, no. 254 (E-533) (2701) 18 August 1987 & JP-A-62 065 455 (TOSHIBA) 24 March 1987

## Description

The present invention relates to a liquid crystal display (LCD) device.

LCD devices are widely used as display devices in personal computers, word processors, etc. A typical LCD device includes two glass substrates with a liquid crystal material held between them. On one substrate, gate and data lines are formed so that they cross each other and a liquid crystal display element including a switching transistor and a display electrode is formed at each of the intersections of the gate and data lines. On the other substrate, a common electrode, a color filter, etc. are formed.

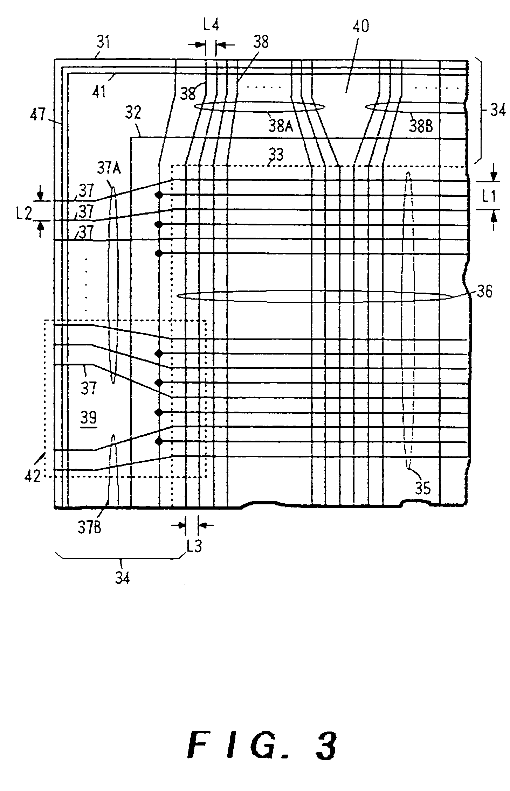

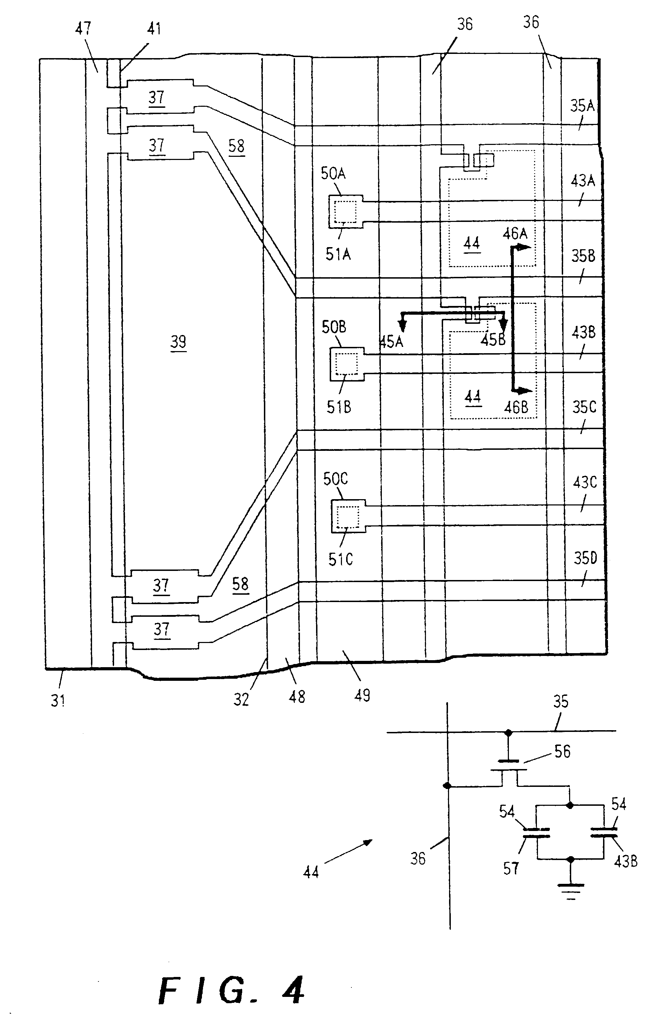

Figure 3 shows the two glass substrates 31 and 32 of the typical liquid crystal display described above. Substrate 31 is divided into a display region 33 and a peripheral region 34. Gate lines 35 and data lines 36 are formed in the display region 33. Formed in the peripheral region 34 are gate line connecting terminals 37 which are separated from each other at a distance L2 smaller than a distance L1 between adjacent gate lines in the display region. Also formed in the peripheral region are data line connecting terminals 38 which are separated from each other at a distance L4 smaller than a distance L3 between the data lines in the display region. There is also formed in the peripheral region a short-circuit line 47 for causing all connection terminals to be short-circuited. The gate and data line connecting terminals 37 and 38 are arranged in a plurality of groups 37A, 37B, etc. and 38A, 38B, etc. Regions 39 and 40 each exist between adjacent groups. In regions 39 and 40, positioning marks (not shown) for connecting a flexible circuit board to the connecting terminals 37 and 38 are formed. The short-circuit line 47 on the glass substrate 31 is removed by cutting it along lines 41 after both glass substrates 31 and 32 are overlapped.

Figure 4 is an enlarged diagram of the section enclosed by dotted lines 42 in Figure 3. Formed between the adjacent gate lines 35 are reference voltage lines 43A, 43B, and 43C. Formed at each of the intersections of the gate and data lines 35 and 36 is a liquid crystal display element 44. Substrates 31 and 32 are sealed with a seal 48. Reference voltage lines 43A, 43B, and 43C each have connection parts 50A, 50B, and 50C. Connection sections 50A, 50B, and 50C are connected to a connection line 49 through openings 51A, 51B, and 51C formed on an insulating layer which covers the whole surface of the glass substrate 31. The connection line 49 is thus connected to the reference voltage lines. An equivalent circuit of the liquid crystal display element 44 is shown in Figure 4. The liquid crystal display element 44 comprises a thin-film transistor 56, an ITO 54, a common electrode 57 and an ITO which are formed on the glass substrate 32, and the reference voltage line 43B. A liquid crystal material exists between the ITO 54 and the common electrode 57. The insulating layer exists between the ITO 54 and the reference voltage line 43. The ITO 54, the reference voltage line 43, and the insulating layer compose a storage capacitor.

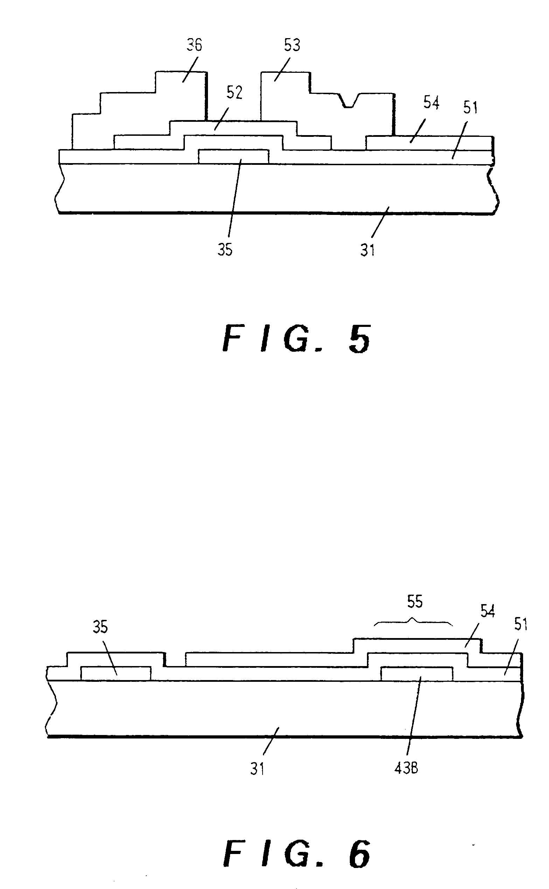

A cross section taken on lines 45A and 45B is shown in Figure 5 and a cross section taken on lines 46A and 46B is shown in Figure 6. Referring to Figure 5, on the glass substrate 31, a gate electrode 35, an insulating layer 51, and a semiconductor layer, for example, an amorphous-silicon layer 52 are formed in this order. The ITO 54, which is a display electrode is then formed. In addition, a source electrode 36, which is the extension of the data line, and a drain electrode 53 are formed. Part of the semiconductor layer 52 between the source and drain electrodes 36 and 53 is a channel region of the thin-film transistor. Referring to Figure 6, the gate line 35 and the reference voltage line 43B are formed simultaneously on the substrate. As described above, the ITO 54 is then formed through the insulating layer. The reference voltage line 43B, the insulating layer 51, and the ITO 54 corresponding to a section 55 compose the storage capacitor of the liquid crystal display element 44.

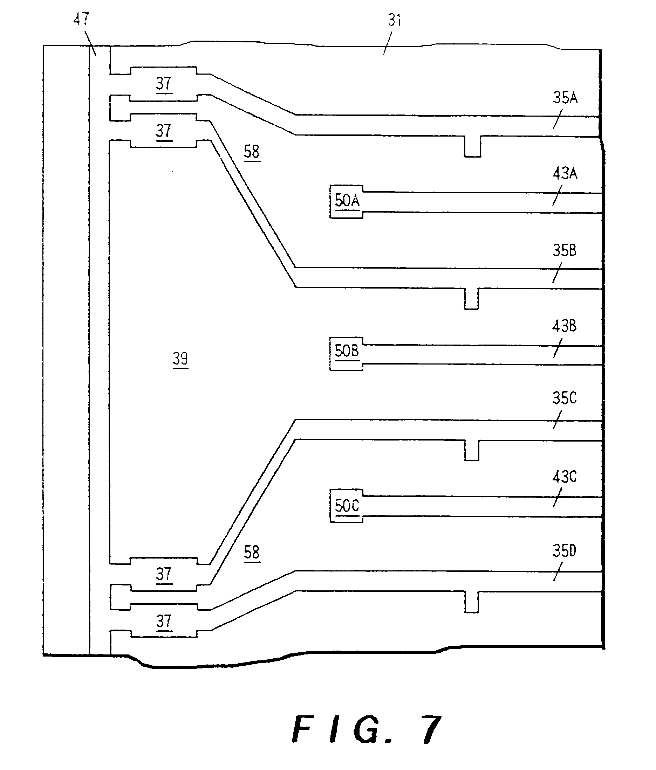

In the liquid crystal display device described above, a line defect or a point defect is caused by various factors in manufacturing processes. A point defect is caused particularly in the liquid crystal display element connected only to the gate line 35B above the region 39 in Figure 4. The point defect differs from other various defects and is caused by the discharge of electric charges stored on the region 39 in Figures 3 and 4 onto the reference voltage line 43B. In the following, such discharge is described by reference to Figure 7. In the first manufacturing process, gate lines 35A to 35D, the gate line connecting terminals 37, reference voltage lines 43A to 43C, connection sections 50A to 50C, and short-circuit line 47 are formed simultaneously on substrate 31. Insulating layer 51 shown in Figures 5 and 6 is then formed over the surface. Then the semiconductor layer 52 and the ITO 54 are finally formed. In this stage, construction of the storage capacitor shown in Figure 6 is completed. As shown in Figure 7, the gate lines 35A, 35B, and 35C are now connected to one another through the short-circuit line 47. On the other hand, the reference voltage lines 43A, 43B, and 43C are floating. The region 39 shown in Figure 7 is larger than a region 58 since the positioning marks (not shown) for connecting the flexible circuit board are formed, as described above. The region 39 is approximately one hundred times as large as the region 58. Accordingly, electrostatic charge stored by static friction, etc. in the manufacturing process is large for the region 39 and small for the region 58. Electrostatic charges stored on the region 39 are discharged onto the gate lines 35B and 35C and the reference voltage line 43B. The gate lines 35B and 35C are connected to each other through the short-circuit line 47 and permit the large capacitance, which causes large electrostatic charge to be absorbed in the large capacitance so that dielectric breakdown does not occur even if such discharge is caused. On the other hand, the reference voltage line 43B offers small capacitance, which causes the insulating layer 51 for the storage capacitor 55 part of which is formed by the reference voltage line 43B to result in dielectric breakdown due to such discharge. As described above, the storage capacitor of the liquid crystal display element connected to the gate line 35B results in dielectric breakdown and a point defect is caused.

In accordance with the present invention, there is provided a liquid crystal display device as defined in claim 1.

Preferably, the short-circuit line, the gate lines, the reference voltage lines, and the conductor are formed on a glass substrate.

In a preferred embodiment of the present invention, the short-circuit line, the gate lines, the reference voltage lines, and the conductor are made of a metallic material selected from a group consisting of an alloy of tantalum and molybdenum, tantalum, aluminum, and chromium.

In a particularly preferred embodiment of the present invention, the conductor is connected to at least two separate points on the short circuit line.

Preferred embodiments of the present invention will now be described, by way of example only, with reference to the accompanying drawings, in which:
Figure 1 is a plan view of a glass substrate of an LCD device of the present invention;
Figure 2 is a plan view of a glass substrate of another LCD device of the present invention;
Figure 3 is a plan view of an LCD device;
Figure 4 is an enlarged view of the part indicated by the dotted lines 42 in Figure 3;
Figure 5 is a sectional view taken on the planes of the lines 45A and 45B in Figure 4;
Figure 6 is a sectional view taken on the planes of the lines 46A and 46B in Figure 4; and
Figure 7 is a diagram showing a problem in the conventional construction of an LCD device.

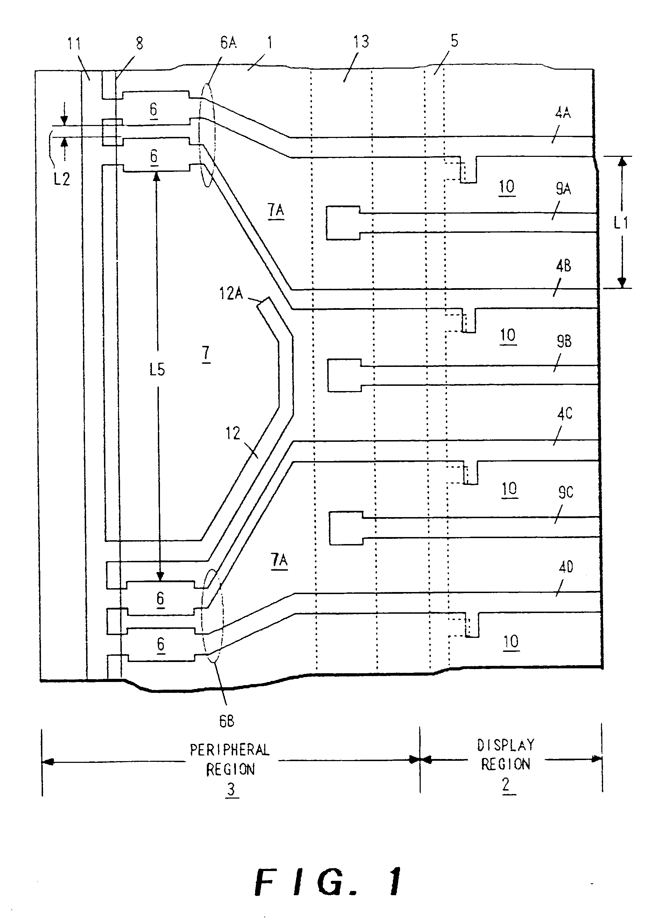

Figure 1 shows a first embodiment according to the present invention. A glass substrate 1 corresponds to the conventional substrate 31 shown in Figure 3. On substrate 1, gate lines 4A, 4B, 4C, and 4D, gate line connecting terminals 6, a conductive short-circuit line 11, a data line 5, a connection line 13, liquid crystal display elements 10, etc. as in Figure 3 are formed. In a display region 2, a plurality of the gate lines are formed in parallel with one another in the horizontal direction. Reference voltage lines 9A, 9B, and 9C, each of which serves as an electrode of a storage capacitor of a liquid crystal display element, are formed between the gate lines. A plurality of the data lines are formed in parallel with one another in the vertical direction. Formed in a peripheral region 3 are gate line connecting terminals 6, the short-circuit line 11, and a conductor 12 extended from the short-circuit line 11. The gate lines are connected to the respective gate line connecting terminals. A flexible circuit board, which provides gate signals to a liquid crystal display device is connected to the gate line connecting terminals. On the glass substrate 1 in Figure 1, such data line connecting terminals as shown in Figure 3 and a voltage source terminal are formed, and the flexible circuit board, which provides data signals, clock pulses, and a driving voltage, is connected to such terminals.

A distance L2 between the gate line connecting terminals 6 in the peripheral region 3 is smaller than a distance L1 between the gate lines 4A, 4B, and 4C in the display region 2. For example, the distances L1 and L2 are approximately 300 and 60 micrometers, respectively. The gate line connecting terminals 6 are arranged in a plurality of groups 6A and 6B, and a large region 7 exists between the groups. In the region 7 positioning marks for exactly connecting the flexible circuit board to the gate line connecting terminals are formed. A length L5 of the region 7 is approximately 6 millimeters, and accordingly the region 7 is approximately one hundred times as large as a region 7A.

According to the present invention, in a first manufacturing process, an alloy of tantalum and molybdenum, tantalum, aluminum, or chromium is deposited. The gate lines 4A, 4B, and 4C, the gate line connecting terminals 6, the conductive short-circuit line 11, the reference voltage lines 9A, 9B, and 9C, and the conductor 12 are formed simultaneously by selective etching through etching masks on the whole surface of substrate 1. Conductor 12 extends from conductive short-circuit line 11 so as to adjoin gate line 4C, which is one of two gate lines 4B and 4C enclosing region 7, reaches between region 7 and reference voltage line 9B, and a tip 12A of conductor 12 is terminated close to the other gate line 4B. This causes electrostatic charges discharged toward the reference voltage line 9B from region 7 to be stored on conductor 12 and prevents the electrostatic charges from being discharged toward reference voltage line 9B, and therefore dielectric breakdown for such a storage capacitor of a liquid crystal display element, as shown in Figure 6, which is composed of a reference voltage line, an insulating layer, and an ITO is prevented. Conductor 12 has an area of cross section sufficient to let electrostatic charges flow into short-circuit line 11. It is preferable that the conductor 12 is 10 to 80 micrometers in width and 500 to 5000 angstroms in thickness.

In a second manufacturing process, an insulating layer corresponding to the insulating layer 51 in FIG.5 and FIG.6 is deposited on the whole surface. A material for the insulating layer is a silicone oxide or a nitrogen oxide.

In a third manufacturing process, an amorphous silicone semiconductor layer as shown in Figure 5 is formed on the insulating layer.

In a fourth manufacturing process, an ITO layer, which serves as a display electrode, as shown in Figure 5, is formed on the insulating layer.

In the fifth manufacturing process, for example, aluminum is deposited on the whole surface and selectively etched, and such a data line and drain electrode as shown in Figure 5 are formed. At the same time, an aluminum short-circuit line which goes along the short-circuit line in Figure 1 and extends in the horizontal direction along a horizontal edge of the glass substrate as shown in Figure 3 is formed. Before aluminum is deposited, an opening is formed on the insulating layer for the short-circuit line 11 which is made of the same material as the gate lines so that the short-circuit line 11 can be electrically connected to the aluminum short-circuit line. This results in the interconnection of all gate and data lines through the short-circuit line. The interconnection through the short-circuit line is not shown since it is well known. In such a manner, dielectric breakdown for the thin-film transistor of the liquid crystal display element is prevented.

In a sixth manufacturing process, an insulating protective layer, an orientation film, etc. are formed. Being well known, they are not shown.

In a seventh manufacturing process, a color filter, a black matrix enclosing the color filter, an orientation film, etc. are formed on the other glass substrate. Being also well known, the process is not shown.

In an eighth manufacturing process, both glass substrates are overlapped with each other at a predetermined distance as shown in Figure 1 and sealed. A liquid crystal material is then enclosed therein. Being well known, the above second to eighth processes are not explained in further detail.

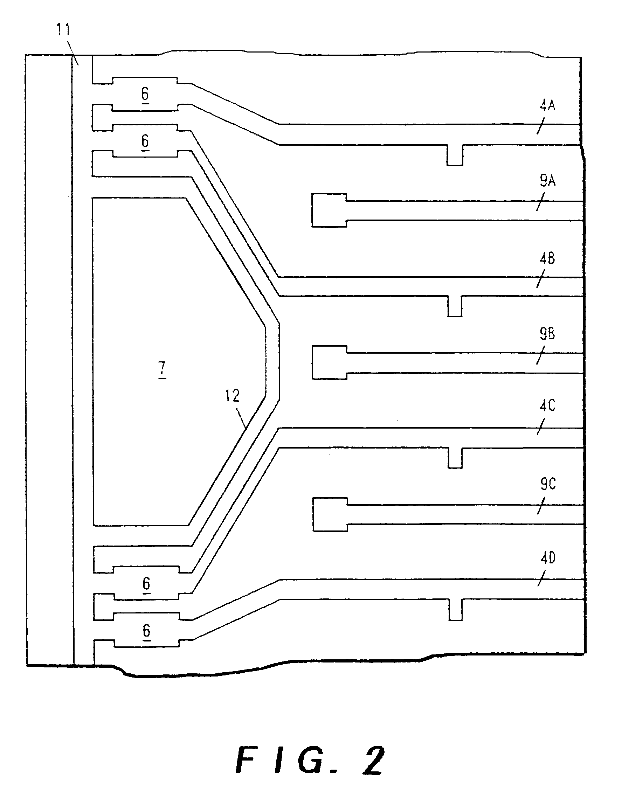

As described above, according to the present invention, conductor 12 is formed simultaneously with gate lines 4A, 4B, 4C, and 4D, the gate line connecting terminals 6, conductive short-circuit line 11, and reference voltage lines 9A, 9B, and 9C in the first process. Conductor 12 is extended from short-circuit line 11 and formed between region 7 and reference voltage line 9B which faces region 7. The same construction that Figures 5 and 6 show is obtained at the time when the fourth process is complete. In that stage, even if electrostatic charges are produced and discharged toward reference voltage line 9B, the electrostatic charges are absorbed into large capacitance produced by short-circuit line 11, the gate lines, and the data line through the conductor 12 and therefore do not reach the reference voltage line 9B, which prevents such dielectric breakdown for the storage capacitor as described above. Figure 2 shows a second embodiment in accordance with the present invention. In the second embodiment, conductor 12 is formed along two gate lines 4B and 4C adjoining region 7 so as to enclose region 7 and both ends of the conductor are connected to short-circuit line 11.

As described above, the present invention serves to prevent dielectric breakdown for a storage capacitor of a liquid crystal display element connected to a predetermined gate line in a liquid crystal display device.

## Claims

1. A liquid crystal display device including a display region (2) in which a plurality of liquid crystal display elements (10) are formed in a matrix and a peripheral region (3) enclosing the display region (2), wherein the display region (2) includes a plurality of gate lines (4) arranged in parallel with one another and a plurality of reference voltage lines (9) each of which is formed between two gate lines (4) and serves as an electrode for a storage capacitor of each of the liquid crystal display elements (10), wherein the peripheral region (3) includes a plurality of connecting terminals (6) which are arranged in groups, the connecting terminals (6) in each group are spaced from each other by a distance less than a distance between adjacent gate lines (4) in the display region (2) and each connecting terminal is connected to a corresponding gate line (4), and wherein the peripheral region further includes a conductive short-circuit line (11) electrically connected to the connecting terminals (6) so that the connecting terminals (6) are short-circuited, and a conductor (12) electrically connected to the conductive short-circuit line (11) which is disposed at that edge of a region (7) between two neighbouring groups of connecting terminals (6) which faces the end portions of the reference voltage lines (9).

2. A device as claimed in claim 1, wherein the short-circuit line (11), the gate lines (4), the reference voltage lines (9), and the conductor (12) are formed on a glass substrate (1).

3. A device as claimed in claim 2, wherein the short-circuit line (11), the gate lines (4), the reference voltage lines (9), and the conductor (12) are made of a metallic material selected from a group consisting of an alloy of tantalum and molybdenum, tantalum, aluminum, and chromium.

4. A device as claimed in any previous claim, wherein the conductor (12) is connected to at least two separate points on the short circuit line (11).

## Patentansprüche

1. Flüssigkristallanzeigevorrichtung, die einen Anzeigebereich (2), in dem eine Mehrzahl von Flüssigkristallanzeigeelementen (10) in einer Matrix ausgebildet sind, und einen peripheren Bereich (3) beinhaltet, der den Anzeigebereich (2) umschließt, wobei der Anzeigebereich (2) eine Mehrzahl von Gate-Leitungen (4), die parallel zueinander angeordnet sind, und eine Mehrzahl von Referenzspannungsleitungen (9) beinhaltet, von denen jede zwischen zwei Gate-Leitungen (4) ausgebildet ist und als eine Elektrode für einen Speicherkondensator von jedem der Flüssigkristallanzeigeelemente (10) dient, wobei der periphere Bereich (3) eine Mehrzahl von Verbindungsanschlüssen (6) beinhaltet, die in Gruppen angeordnet sind, wobei die Verbindungsanschlüsse (6) in jeder Gruppe durch einen Abstand voneinander getrennt sind, der geringer als der Abstand zwischen benachbarten Gate-Leitungen (4) in dem Anzeigebereich (2) ist, und jeder Verbindungsanschluß mit einer entsprechenden Gate-Leitung (4) verbunden ist, und wobei der periphere Bereich des weiteren eine leitfähige Kurzschlußleitung (11) beinhaltet, die mit den Verbindungsanschlüssen (6) elektrisch verbunden ist, so daß die Verbindungsanschlüsse (6) kurzgeschlossen sind,
sowie einen Leiter (12) beinhaltet, der mit der leitfähigen Kurzschlußleitung (11) elektrisch verbunden ist und an derjenigen Kante eines Bereichs (7) zwischen zwei benachbarten Gruppen von Verbindungsanschlüssen (6) angeordnet ist, der den Endbereichen der Referenzspannungsleitungen (9) gegenüberliegt.

2. Vorrichtung, wie in Anspruch 1 beansprucht, wobei die Kurzschlußleitung (11), die Gate-Leitungen (4), die Referenzspannungsleitungen (9) und der Leiter (12) auf einem Glassubstrat (1) ausgebildet sind.

3. Vorrichtung, wie in Anspruch 2 beansprucht, wobei die Kurzschlußleitung (11), die Gate-Leitungen (4), die Referenzspannungsleitungen (9) und der Leiter (12) aus einem metallischen Material bestehen, das aus einer Gruppe ausgewählt ist, die aus einer Legierung von Tantal und Molybdän, Tantal, Aluminium und Chrom besteht.

4. Vorrichtung, wie in irgendeinem vorhergehenden Anspruch beansprucht, wobei der Leiter (12) mit wenigstens zwei separaten Punkten auf der Kurzschlußleitung (11) verbunden ist.

## Revendications

1. Un dispositif d'affichage à cristaux liquides comprenant une zone d'affichage (2) dans laquelle une pluralité d'éléments d'affichage à cristaux liquides (10) sont formés, en matrice, et une zone périphérique (3) enclosant la zone d'affichage (2), dans lequel la zone d'affichage (2) comprend une pluralité de lignes de grille (4) disposées en parallèle les unes les autres, et une pluralité de lignes de tension de référence (9) dont chacune est formée entre deux lignes de grille (4) et sert d'électrode pour un condensateur de stockage de chacun des éléments d'affichage à cristaux liquides (10), dans lequel la zone périphérique (3) comprend une pluralité de bornes de connexion (6), agencées par groupes, les bornes de connexion (6) se trouvant dans chaque groupe étant espacées les unes des autres d'une distance inférieure à la distance existant entre des lignes de grille (4) adjacentes dans la zone d'affichage (2), et chaque borne de connexion étant connectée à une ligne de grille (4) correspondante, et dans lequel la zone périphérique comprend en outre une ligne conductrice de court-circuit (11), connectée électriquement aux bornes de connexion (6), de manière que les bornes de connexion (6) soient mises en court-circuit,
et un conducteur (12) connecté électriquement à la ligne conductrice de court-circuit (11), disposée sur le bord d'une zone (7) se trouvant entre deux groupes voisins de bornes de connexion (6) placés en regard des parties d'extrémité des lignes de tension de référence (9).

2. Un dispositif selon la revendication 1, dans lequel la ligne de court-circuit (11), les lignes de grille (4), les lignes de tension de référence (9) et le conducteur (12) sont formés sur un substrat (1) en verre.

3. Un dispositif selon la revendication 2, dans lequel la ligne de court-circuit (11), les lignes de grille (4), les lignes de tension de référence (9) et le conducteur (12) sont constitués d'un matériau métallique sélectionné dans le groupe comprenant un alliage de tantale et de molybdène, le tantale, l'aluminium et le chrome.

4. Un dispositif selon l'une quelconque des revendications précédentes, dans lequel le conducteur (12) est connecté à au moins deux points séparés sur la ligne de court-circuit (11).
